# FASCICULE DE BREVET EUROPEEN

(11) **EP 2 401 664 B1**
(45) Date de publication et mention de la délivrance du brevet: **21.03.2018**
(21) Numéro de dépôt: 10709905.3
(22) Date de dépôt: 24.02.2010
(51) Int. Cl.: G05D 23/13

(54) **VANNE MÉLANGEUSE THERMOSTATIQUE.**
THERMOSTATMISCHVENTIL
THERMOSTATIC MIXING VALVE

(30) Priorité: 26.02.2009 FR 0951207
(43) Date de publication de la demande: 04.01.2012
(73) Titulaire: Watts Industries France, 80390 Fressenneville (FR)
(72) Inventeur: MENET, Georges, F-73800 Les Marches (FR)
(74) Mandataire: Zapalowicz, Francis
(86) Numéro de dépôt international: PCT/FR2010/050315
(87) Numéro de publication internationale: WO 2010/097545

(56) Documents cités:
- DE-A1- 3 740 040
- US-A1- 2008 257 969

## Description

La présente invention concerne le domaine des vannes thermostatiques permettant de mélanger des fluides à des températures différentes pour obtenir un fluide à une température contrôlée.

De telles vannes peuvent être en particulier utilisées dans le domaine des installations sanitaires domestiques pour délivrer de l'eau sanitaire à une température contrôlée et dans le domaine des régulations de l'eau de chauffage dans toutes sortes d'application.

Des vannes mélangeuses thermostatiques connues comprennent un tiroir de mélangeage coulissant entre deux sièges fixes, l'eau chaude et l'eau froide étant amenées au travers des espaces entre le tiroir de mélangeage et respectivement ces deux sièges fixes. Le tiroir est actionné par un vérin thermique contenant un produit dont le volume varie avec la température et dont la variation de volume contrôle la position du tiroir entre les deux sièges fixes.

Le brevet DE 37 40040 décrit une vanne de mélangeage comprenant un tiroir de mélangeage associé à un plateau mobiles entre des sièges pour réguler le mélange entre une eau froide et une eau chaude sous l'effet d'un vérin thermique, ainsi qu'un organe de sécurité en cas de surcharge, éloignés du tiroir de mélangeage et du plateau, pour absorber des excès de déplacement du vérin thermique.

La présente invention a pour but un perfectionnement à de telles vannes thermostatiques.

Il est proposé une vanne mélangeuse thermostatique qui comprend un moyen de mélangeage mobile entre deux sièges pour mélanger des fluides à des températures différentes susceptibles de passer entre le moyen de mélangeage et respectivement ces deux sièges pour délivrer un fluide mitigé ; et un moyen d'actionnement sensible à la température du fluide mitigé pour produire une course de régulation de la position du moyen de mélangeage entre les deux sièges de façon à délivrer un fluide mitigé à une température régulée et qui comprend un organe d'absorption.

Selon l'invention, ledit moyen d'actionnement est installé entre ledit moyen de mélangeage et ledit organe d'absorption, et ledit organe d'absorption présente l'un desdits sièges et est apte à être déplacé dans le sens de l'accroissement de la distance entre les deux sièges lorsque le moyen de mélangeage est en appui sur l'autre siège, de façon à absorber un excès de course du moyen d'actionnement sous l'effet d'un excès de variation de la température du fluide mitigé.

La vanne mélangeuse thermostatique peut comprendre un carter présentant un espace intérieur axial dans lequel sont ménagés un siège annulaire, formant ledit autre siège, et un épaulement distants axialement l'un de l'autre et orientés selon le même sens axial, un premier passage latéral de communication entre une première entrée (pour l'entrée d'un fluide chaud et l'espace intérieur, un second passage latéral de communication entre une seconde entrée pour l'entrée d'un fluide froid et l'espace intérieur et un troisième passage de communication entre l'espace intérieur et une sortie située en aval du siège du carter pour la sortie d'un fluide mitigé résultant du mélangeage.

Ledit organe d'absorption peut être monté coulissant axialement dans ledit espace intérieur et sollicité vers ledit épaulement par un premier ressort.

Ledit moyen de mélangeage peut comprendre un tiroir de mélangeage monté coulissant axialement dans ledit espace intérieur entre le siège du carter et le siège de l'organe d'absorption et sollicité vers ledit organe d'absorption par un second ressort, ce tiroir présentant un passage axial, ledit premier passage latéral de communication étant susceptible d'être obstrué par le tiroir coulissant de mélangeage lorsque ce dernier coopère avec le siège du carter et ledit second passage latéral de communication étant susceptible d'être obstrué par le tiroir coulissant de mélangeage lorsque ce dernier coopère avec un siège dudit organe d'absorption ; et un vérin thermique axial comprenant un corps contenant un produit dont le volume varie avec la température et une tige axiale dont la position par rapport au corps varie en fonction du volume du produit, le corps du vérin étant solidaire du tiroir et placé au moins en partie dans le troisième passage de communication et la tige du vérin étant apte à venir axialement en contact avec ledit organe d'absorption.

L'organe d'absorption peut comprendre un plateau apte à venir en appui sur ledit épaulement et présentant ledit siège et un noyau réglable axialement par rapport au plateau, la tige du vérin thermique étant apte à venir en contact avec ce noyau axial.

Le tiroir coulissant de mélangeage peut comprendre une partie extérieure montée coulissante dans une partie annulaire du carter séparant le premier et le second passage de communication et une partie centrale reliée à cette partie extérieure et sur laquelle est monté le corps du vérin thermique.

Une entretoise peut être montée sur le corps du vérin thermique, le second ressort étant interposé entre cette entretoise et une partie du carter.

Une vanne mélangeuse thermostatique va maintenant être décrite de façon non limitative, en référence au dessin sur lequel :
- la figure 1 représente une coupe longitudinale d'une vanne mélangeuse thermostatique, en position de mélangeage d'eau chaude et d'eau froide ;
- la figure 2 représente une coupe longitudinale de la vanne mélangeuse thermostatique de la figure 1, en position de fermeture de l'entrée d'eau froide ;
- la figure 3 représente une coupe longitudinale de la vanne mélangeuse thermostatique de la figure 1, en position de fermeture de l'entrée d'eau chaude ;
- et la figure 4 représente une coupe longitudinale de la vanne mélangeuse thermostatique de la figure 1, en position de fermeture de l'entrée d'eau chaude et d'excès de course.

La vanne mélangeuse thermostatique 1 représentée sur les figures comprend un carter 2 qui comprend une partie tubulaire longitudinale 3 établie selon un axe 4.

Cette partie tubulaire longitudinale 3 présente un embout d'extrémité 5 formant une sortie 6, sur lequel peuvent être branchés un conduit de sortie, une partie centrale 7 et un embout d'extrémité 8 opposé à l'embout d'extrémité 5.

Dans la partie centrale 7 est ménagé un espace intérieur 9 dans lequel sont formés, successivement à partir de la sortie 6, un passage cylindrique de communication 10, un épaulement annulaire 11 constituant un siège annulaire, une gorge annulaire 12 dont un côté prolonge l'épaulement annulaire 11, une portion cylindrique 13, une partie cylindrique 14, un épaulement annulaire 15 et une portion cylindrique 16. Ainsi, l'épaulement annulaire 11 et l'épaulement annulaire 15 sont orientés selon le même sens axial.

Le diamètre de la portion cylindrique 13 est plus petit que le diamètre du passage cylindrique 10. Le diamètre au fond de la gorge annulaire 12 et celui de la partie cylindrique 14 sont plus grands que le diamètre de la portion cylindrique 13. Le diamètre de la portion cylindrique 16 est plus grand que le diamètre de la partie cylindrique 14.

Le carter 2 comprend en outre des branches latérales opposées 17 et 18, formant une première entrée 19 et une seconde entrée 20. La première entrée 19 communique avec l'espace intérieur 9 de la partie tubulaire 3 par un passage 21 qui débouche dans la gorge 12. La seconde entrée 20 communique avec l'espace intérieur 9 du carter 2 par un passage 22 qui débouche dans la partie cylindrique 14.

La vanne mélangeuse 1 comprend également un organe d'absorption 23 coulissant axialement, qui comprend un plateau 24 placé radialement dans la partie cylindrique 16 de la partie tubulaire 3 et un noyau axial cylindrique 25 dont une extrémité est vissée dans la partie centrale du plateau radial 24 et dont l'autre extrémité est engagée de façon coulissante dans une partie axiale cylindrique 26 d'un bouchon d'extrémité 27 vissé dans l'embout d'extrémité 8.

Un joint annulaire d'étanchéité 28 est interposé entre le noyau axial 25 et la partie axiale 26 du bouchon d'extrémité 27. Un joint annulaire d'étanchéité 29 est interposé entre le bouchon d'extrémité 27 et l'embout d'extrémité 8.

Un ressort hélicoïdal 30 est interposé entre le plateau 24 de l'organe d'absorption 23 et le bouchon d'extrémité 27, ce ressort 30 sollicitant l'organe d'absorption 23 dans le sens qui rapproche axialement et amène en butée le plateau 24 sur l'épaulement 15.

La vanne mélangeuse 1 comprend également un moyen de mélangeage constitué par un tiroir de mélangeage 31 qui comprend une partie tubulaire cylindrique extérieure 32 montée coulissante dans la portion cylindrique 13 de l'espace intérieur 9 du carter 2, avec interposition d'un joint annulaire 33. Cette partie tubulaire extérieure 32 est mobile axialement entre le siège 11 du carter 2 et le plateau 24 de l'organe d'absorption 23 et présente une extrémité annulaire 32a apte à venir en contact étanche avec le siège 11 et une extrémité annulaire 32b apte à venir en contact étanche avec une zone annulaire du plateau 24 constituant un siège 11a, à l'opposé du ressort 30.

Le tiroir de mélangeage 31 comprend en outre une partie tubulaire cylindrique intérieure 34 reliée à la partie tubulaire extérieure 32 par l'intermédiaire de branches radiales 35, de telle sorte que le tiroir de mélangeage 31 présente un passage axial 36 entre ces parties tubulaires 32 et 34.

La vanne mélangeuse 1 comprend également un moyen d'actionnement constitué par un vérin thermique axial 37 qui comprend un corps axial 38 contenant un produit dont le volume varie avec la température et une tige axial 39 qui traverse une partie avant 40 du corps 38 et dont la position axiale par rapport au corps 38 varie en fonction du volume du produit. Ce produit peut être à base de cire.

La partie avant 40 du corps 38 est montée dans la partie tubulaire intérieure 34 du tiroir de mélangeage 31 et une partie annulaire en saillie 41 de ce corps 38 est en buttée contre une extrémité de cette partie tubulaire intérieure 34, de telle sorte que le corps 38 s'étend en grande partie en aval du siège 11 de l'espace intérieur 9 du carter 2, du côté de la sortie 6, et que la tige 39 est apte à venir axialement contre le noyau 25 de l'organe d'absorption 23, du même côté que l'extrémité 32b du tiroir de mélangeage 31.

Une entretoise annulaire 42 est montée autour et à distance du corps 38 du vérin thermique 37 et présente des ailettes intérieures 43 en contact avec le corps 38 et en butée axiale contre la partie annulaire en saillie 41 de ce corps 38, de telle sorte qu'il existe un passage axial 44 entre le corps 38 du vérin 37 et l'entretoise annulaire 42. La surface périphérique de l'entretoise annulaire 42 peut être ajustée de façon à coulisser et être guidée dans la partie cylindrique 10 du carter 2.

Un ressort hélicoïdal 45 est interposé entre l'entretoise annulaire 42 et un épaulement intérieur 46 de l'embout d'extrémité 5, de telle sorte que ce ressort 45 agit axialement sur l'ensemble mobile formé par le tiroir de mélangeage 31, le corps 38 du vérin thermique 37 et l'entretoise 42 dans le sens qui éloigne l'extrémité 32a de la partie tubulaire extérieure 32 du tiroir de mélangeage 31 par rapport au siège 11.

La vanne mélangeuse thermostatique 1 peut fonctionner de la manière suivante.

L'entrée 19 du carter 2 est reliée à une source d'eau chaude EC et l'entrée 20 du carter 2 est reliée à une source d'eau froide EF.

De l'eau mitigée ou tempérée EM, issue d'un mélange contrôlé de l'eau chaude d'entrée et de l'eau froide d'entrée, sort par la sortie 6.

Cette eau mitigée EM de sortie peut être à une température comprise entre un seuil bas Sb de température et un seuil haut Sh de température, dont les valeurs dépendent des caractéristiques thermiques du vérin thermique 37, produisant le déplacement axial de la tige du vérin 39 par rapport à son corps 38, du réglage axiale du noyau 25 de l'organe d'absorption 23 par rapport à la tige axial 39 du vérin thermique 37, et de la course de la partie tubulaire extérieure 32 du tiroir de mélangeage 31 entre le siège 11 et le siège 11a du plateau 24 de l'organe d'absorption 23.

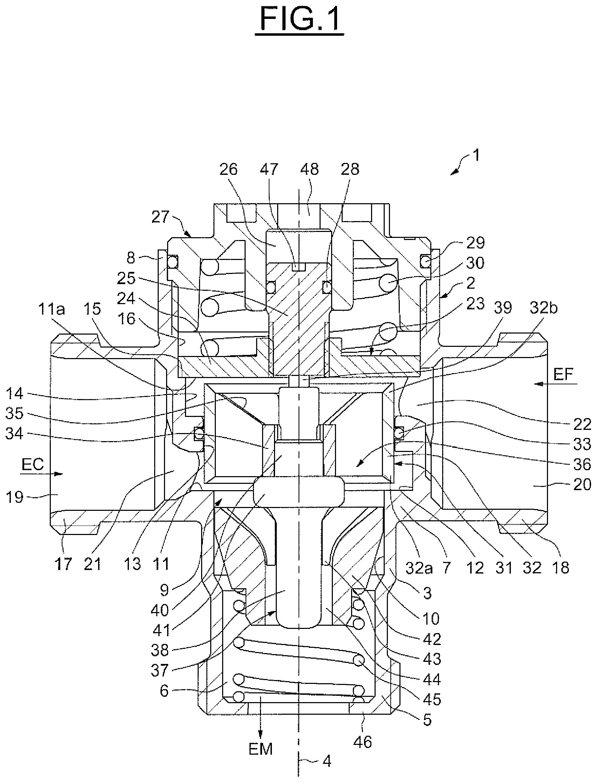

Comme le montre la figure 1, le mélangeage de l'eau EC et de l'eau froide EF se produit de la manière suivante.

Lorsque la température de l'eau mitigée EM de sortie est à une température comprise entre le seuil bas Sb et le seuil haut Sh, les extrémités annulaires 32a et 32b de la partie extérieure 32 du tiroir de mélangeage 31 sont respectivement à distance du siège annulaire 11 du carter 2 et du siège 11a du plateau 24 de l'organe d'absorption 23, le plateau 24 étant en appui sur l'épaulement 14 sous l'effet du ressort 30, tandis que la tige 39 du vérin thermique est en appui sur le noyau 25 de l'organe d'absorption 23 sous l'effet du ressort 45.

De l'eau chaude EC traverse le passage de communication 21 et passe vers l'intérieur entre l'extrémité annulaire 32a et le siège annulaire 11. En même temps, de l'eau froide EF traverse le passage de communication 22, passe vers l'intérieur entre l'extrémité annulaire 32b et le plateau 24 et passe au travers du passage axial 36 du tiroir de mélangeage 31. L'écoulement d'eau chaude EC et l'écoulement d'eau froide EF se rencontrent approximativement au niveau du siège annulaire 11 et se mélangent pour obtenir un écoulement d'eau mitigée EM qui passe axialement autour du corps 38 du vérin thermique 37 en direction de la sortie 6. Le volume du produit enfermé dans le vérin thermique 37, qui détermine la position axiale de la tige 39 par rapport au corps 38 du vérin thermique 37, qui détermine la position du tiroir de mélangeage 31, permet la situation fonctionnelle ci-dessus.

Lorsque la température de l'eau mitigée EM descend vers le seuil bas Sb, le volume du produit enfermé dans le vérin thermique 37 se réduit, la tige 39 rentre dans le corps 38 du vérin thermique 37 et le tiroir de mélangeage 31 s'éloigne du siège annulaire 11 et se rapproche du plateau 24. L'entrée d'eau chaude EC augmente et l'entrée d'eau froide EF se réduit.

Lorsque la température de l'eau mitigée EM monte vers le seuil haut Sh, le volume du produit enfermé dans le vérin thermique 37 augmente, la tige 39 sort du corps 38 du vérin thermique 37 et le tiroir de mélangeage 31 se rapproche du siège annulaire 11 et s'éloigne du plateau 24. L'entrée d'eau chaude EC se réduit et l'entrée d'eau froide EF augmente. Il se produit ainsi une situation de régulation de la température de l'eau mitigée EM de sortie entre le seuil bas Sb et le seuil haut Sh.

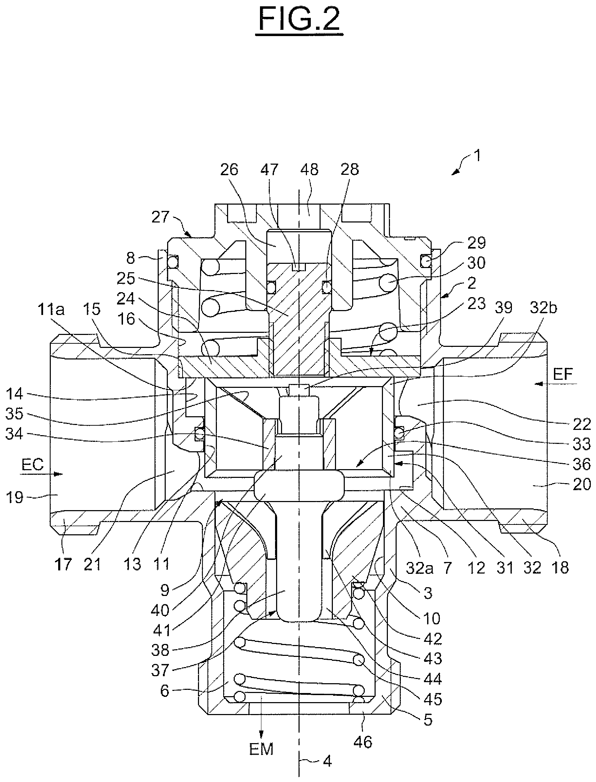

Comme le montre la figure 2, lorsque la température atteint le seuil bas Sb, la réduction du volume du produit enfermé dans le vérin thermique 37 fait que l'extrémité 32b de la partie extérieure 32 du tiroir de mélangeage 31 atteint le plateau 24 de l'organe d'absorption 23 et la partie extérieure 32 du tiroir de mélangeage 31 ferme l'entrée de l'eau froide EF.

Lorsque la température passe au-dessous du seuil bas Sb, cette situation est maintenue et la tige 39 du vérin thermique 37 s'éloigne du noyau 25 en conséquence de la réduction du volume du produit contenu dans le vérin thermique 37, due à l'excès de réduction de la température de l'eau mitigée. Le tarage des ressorts 30 et 45 l'un par rapport à l'autre est adapté pour produire cette situation. En fait, la force axiale du ressort 30 est supérieure à la force axiale du ressort 45. Il en résulte que l'entrée d'eau froide EF est coupée et que seule l'entrée d'eau chaude EC se produit, ce qui fait remonter la température du produit contenu dans le vérin thermique 37 et augmenter son volume pour provoquer des déplacements inverses et rétablir la situation de régulation décrite en référence à la figure 1.

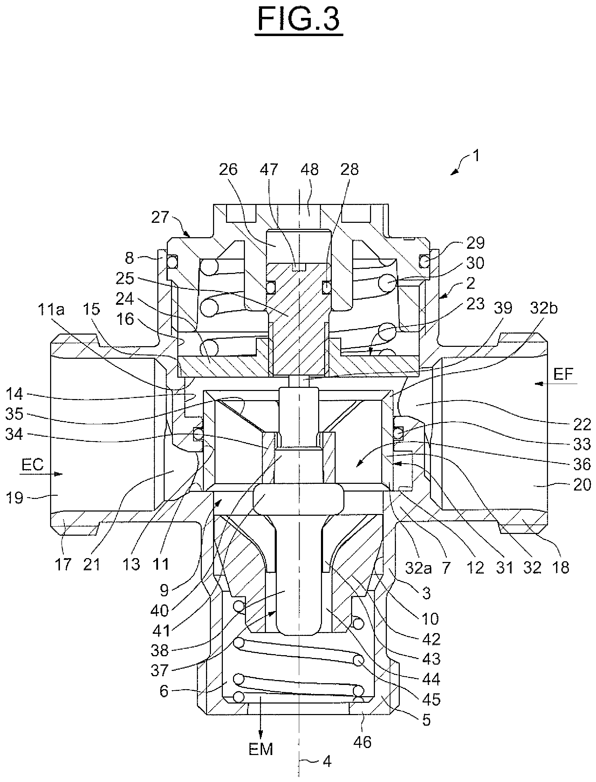

Comme le montre la figure 3, lorsque la température atteint le seuil haut Sh, l'augmentation du volume du produit enfermé dans le vérin thermique 37 fait que l'extrémité 32a de la partie extérieure 32 du tiroir de mélangeage 31 atteint le siège annulaire 11 et la partie extérieure 32 du tiroir de mélangeage 31 ferme le passage 21 d'entrée de l'eau chaude EC.

Lorsque la température passe au-dessus du seuil haut Sh, cette situation est maintenue. Le volume du produit enfermé dans le vérin thermique 37 continuant d'augmenter sous l'effet d'un excès d'augmentation de la température de l'eau mitigée EM, la tige 39 du vérin thermique 37 en appui sur le noyau 25 provoque le déplacement de l'organe d'absorption 23 à l'encontre du ressort 30 en éloignant le plateau 24 de l'épaulement 15, ce qui augmente la distance entre le siège 11a du plateau 24 et le siège 11 du carter 2.

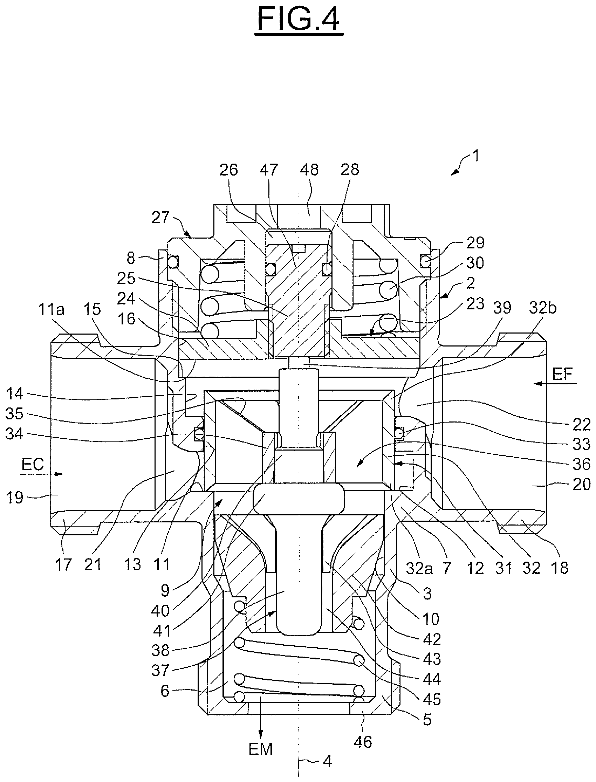

Comme le montre la figure 4, il résulte de la situation ci-dessus que l'entrée d'eau chaude EC est coupée et que seule l'entrée d'eau froide EF se produit, ce qui fait redescendre la température du produit contenu dans le vérin thermique 37 et provoque sa réduction de volume pour provoquer des déplacements inverses et rétablir la situation de régulation décrite en référence à la figure 1.

Le réglage des seuils Sh et Sb de température de fonctionnement de la vanne 1 peut être assuré en réglant la position axial du noyau axial cylindrique 25 par rapport au plateau radial 24, par vissage ou dévissage du noyau grâce à un tournevis que l'on peut mettre en prise avec une fente 47 ménagée dans l'extrémité du noyau 25, cette fente 47 étant accessible au travers d'un passage axial 48 du bouchon d'extrémité 27.

## Revendications

1. Vanne mélangeuse thermostatique comprenant
un moyen de mélangeage (31) mobile entre deux sièges (11, 11a) pour mélanger des fluides à des températures différentes susceptibles de passer entre le moyen de mélangeage et respectivement ces deux sièges pour délivrer un fluide mitigé ;
un moyen d'actionnement (37) sensible à la température du fluide mitigé pour produire une course de régulation de la position du moyen de mélangeage entre les deux sièges de façon à délivrer un fluide mitigé à une température régulée ; et
un organe d'absorption (23) ;
**caractérisée par le fait que** ledit moyen d'actionnement est installé entre ledit moyen de mélangeage (31) et ledit organe d'absorption (23), et que ledit organe d'absorption (23) présente l'un (11a) desdits sièges et est apte à être déplacé dans le sens de l'accroissement de la distance entre les deux sièges lorsque le moyen de mélangeage (31) est en appui sur l'autre siège (11), de façon à absorber un excès de course du moyen d'actionnement (37) sous l'effet d'un excès de variation de la température du fluide mitigé.

2. Vanne selon la revendication 1, comprenant :
un carter (2) présentant un espace intérieur axial (9) dans lequel sont ménagés un siège annulaire (11), formant ledit autre siège, et un épaulement annulaire (15), distants axialement l'un de l'autre et orientés selon le même sens axial, un premier passage latéral (21) de communication entre une première entrée (19) pour l'entrée d'un fluide chaud et l'espace intérieur, un second passage latéral (22) de communication entre une seconde entrée (20) pour l'entrée d'un fluide froid et l'espace intérieur et un troisième passage de communication (10) entre l'espace intérieur et une sortie (6) située en aval du siège (11) du carter pour la sortie d'un fluide mitigé résultant du mélangeage ;
dans lequel ledit organe d'absorption (23) est monté coulissant axialement dans ledit espace intérieur (9) et est sollicité vers ledit épaulement (15) par un premier ressort (30) ;
dans lequel ledit moyen de mélangeage comprend un tiroir de mélangeage (31) monté coulissant axialement dans ledit espace intérieur (9) entre le siège (11) du carter et le siège de l'organe d'absorption (23) et sollicité vers ledit organe d'absorption par un second ressort (45), ce tiroir présentant un passage axial (36), ledit premier passage latéral de communication (21) étant susceptible d'être obstrué par le tiroir coulissant de mélangeage (31) lorsque ce dernier coopère avec le siège (11) du carter et ledit second passage latéral de communication (22) étant susceptible d'être obstrué par le tiroir coulissant de mélangeage (31) lorsque ce dernier coopère avec le siège (11a) dudit organe d'absorption (23) ;
et dans lequel ledit moyen d'actionnement comprend un vérin thermique axial (37) comprenant un corps (38) contenant un produit dont le volume varie avec la température et une tige axiale (39) dont la position par rapport au corps varie en fonction du volume du produit, le corps (38) du vérin étant solidaire du tiroir (31) et placé au moins en partie dans le troisième passage de communication (10) et la tige (39) du vérin étant apte à venir axialement en contact avec ledit organe d'absorption (23).

3. Vanne selon la revendication 2, dans laquelle ledit organe d'absorption (23) comprend un plateau (24) apte à venir en appui sur ledit épaulement (15) et présentant ledit siège (11a) et un noyau (25) réglable axialement par rapport au plateau (24), la tige (39) du vérin thermique étant apte à venir en contact avec ce noyau axial (25).

4. Vanne selon l'une des revendications 2 et 3, dans laquelle le tiroir coulissant de mélangeage (31) comprend une partie extérieure (32) montée coulissante dans une partie annulaire (13) du carter séparant le premier et le second passage de communication (21, 22) et une partie centrale (34) reliée à cette partie extérieure et sur laquelle est monté le corps (40) du vérin thermique.

5. Vanne selon l'une quelconque des revendications 2 à 4, **caractérisé par le fait qu'**elle comprend une entretoise (42) montée sur le corps (38) du vérin thermique, le second ressort (45) étant interposé entre cette entretoise (42) et une partie (46) du carter.

## Patentansprüche

1. Thermostatmischventil, umfassend:
eine zwischen zwei Sitzen (11, 11a) bewegliche Mischeinrichtung (31) zum Mischen unterschiedlich temperierter Fluide, die zwischen der Mischeinrichtung und jeweils diesen beiden Sitzen strömen können, zum Ausgeben eines durchmischten Fluids;
eine für die Temperatur des durchmischten Fluids empfindliche Betätigungseinrichtung (37) zum Erzeugen eines Hubs zur Regelung der Stellung der Mischeinrichtung zwischen den beiden Sitzen, um ein durchmischtes Fluid mit einer regulierten Temperatur auszugeben; und
ein Absorptionsglied (23);
**dadurch gekennzeichnet, dass** die Betätigungseinrichtung zwischen der Mischeinrichtung (31) und dem Absorptionsglied (23) angebracht ist und dass das Absorptionsglied (23) den einen (11a) der Sitze aufweist und in der Richtung der zunehmenden Entfernung zwischen den beiden Sitzen verschiebbar ist, wenn die Mischeinrichtung (31) auf dem anderen Sitz (11) aufliegt, um ein durch ein Übermaß an Variation bei der Temperatur des durchmischten Fluids bewirktes Übermaß an Hub der Betätigungseinrichtung (37) zu absorbieren.

2. Ventil nach Anspruch 1, umfassend:
ein Gehäuse (2), aufweisend einen axialen Innenraum (9), in dem ein ringförmiger Sitz (11), der den anderen Sitz bildet, und eine ringförmige Schulter (15), die axial voneinander entfernt und in die gleiche axiale Richtung ausgerichtet sind, ausgebildet sind, einen ersten lateralen Durchgang (21) zur Kommunikation zwischen einem ersten Einlass (19) für den Einlauf eines heißen Fluids und dem Innenraum, einen zweiten lateralen Durchgang (22) zur Kommunikation zwischen einem zweiten Einlass (20) für den Einlauf eines kalten Fluids und dem Innenraum und einen dritten Kommunikationsdurchgang (10) zwischen dem Innenraum und einem dem Sitz (11) des Gehäuses nachgelagert angeordneten Auslass (6) für den Auslauf eines sich aus dem Mischen ergebenden durchmischten Fluids;
wobei das Absorptionsglied (23) in dem Innenraum (9) axial gleitend angebracht ist und von einer ersten Feder (30) in Richtung der Schulter (15) vorgespannt wird;
wobei die Mischeinrichtung einen Mischschieber (31) umfasst, der in dem Innenraum (9) zwischen dem Sitz (11) des Gehäuses und dem Sitz des Absorptionsglieds (23) axial gleitend angebracht ist und von einer zweiten Feder (45) in Richtung des Absorptionsglieds vorgespannt wird, wobei der Schieber einen axialen Durchgang (36) aufweist, wobei der erste laterale Kommunikationsdurchgang (21) von dem gleitenden Mischschieber (31) gesperrt werden kann, wenn dieser mit dem Sitz (11) des Gehäuses zusammenwirkt, und wobei der zweite laterale Kommunikationsdurchgang (22) von dem gleitenden Mischschieber (31) gesperrt werden kann, wenn dieser mit dem Sitz (11a) des Absorptionsglieds (23) zusammenwirkt;
und wobei die Betätigungseinrichtung einen axialen Thermozylinder (37) umfasst, der einen Körper (38), der ein Produkt enthält, dessen Volumen sich mit der Temperatur verändert, und eine axiale Stange (39), deren Lage in Bezug auf den Körper sich in Abhängigkeit vom Volumen des Produkts verändert, umfasst, wobei der Körper (38) des Zylinders mit dem Schieber (31) in fester Verbindung steht und wenigstens zum Teil in dem dritten Kommunikationsdurchgang (10) positioniert ist, und wobei die Stange (39) des Zylinders dazu in der Lage ist, das Absorptionsglied (23) axial zu berühren.

3. Ventil nach Anspruch 2, wobei das Absorptionsglied (23) eine Platte (24), die in der Lage ist, in Anlage an die Schulter (15) zu kommen, und die den Sitz (11a) aufweist, und einen in Bezug auf die Platte (24) axial verstellbaren Kern (25) umfasst, wobei die Stange (39) des Thermozylinders in der Lage ist, diesen axialen Kern (25) zu berühren.

4. Ventil nach einem der Ansprüche 2 und 3, wobei der gleitende Mischschieber (31) einen äußeren Teil (32), der gleitend in einem Ringteil (13) des Gehäuses, den ersten und den zweiten Kommunikationsdurchgang (21, 22) trennend, angebracht ist, und einen mittigen Teil (34), der mit diesem äußeren Teil verbunden ist und an dem der Körper (40) des Thermozylinders angebracht ist, umfasst.

5. Ventil nach einem der Ansprüche 2 bis 4, **dadurch gekennzeichnet, dass** es ein Distanzstück (42) umfasst, das an dem Körper (38) des Thermozylinders angebracht ist, wobei die zweite Feder (45) diesem Distanzstück (42) und einem Gehäuseteil (46) zwischengeordnet ist.

## Claims

1. A thermostatic mixing valve comprising
a mixing means (31) that is able to move between two seats (11, 11a) in order to mix fluids at different temperatures that are able to pass between the mixing means and each of these two seats in order to supply a mixed fluid;
an actuating means (37) sensitive to the temperature of the mixed fluid in order to produce a travel regulating the position of the mixing means between the two seats so as to supply a mixed fluid at a regulated temperature; and
an absorption member (23);
**characterized in that**
the said actuating means (37) is fitted between the said mixing means (31) and the said absorption member (23), and **in that** the said absorbing member (23) has one (11a) of the said seats and is able to be moved in the direction of the increasing distance between the two seats when the mixing means (31) is bearing against the other seat (11), so as to absorb an excess travel of the actuating means (37) under the effect of an excess in variation in the temperature of the mixed fluid.

2. The valve as claimed in claim 1, comprising:
a casing (2) having an axial internal space (9) in which there are arranged an annular seat (11), forming the said other seat, and an annular shoulder (15), which are spaced apart axially from one another and are oriented in the same axial direction, a first lateral communicating passage (21) between a first inlet (19) for the inlet of a hot fluid and the internal space, a second lateral communicating passage (22) between a second inlet (20) for the inlet of a cold fluid and the internal space and a third communicating passage (10) between the internal space and an outlet (6) located downstream of the seat (11) of the casing for the outlet of a mixed fluid that results from the mixing;
in which the said absorption member (23) is mounted such that it can slide axially in said internal space (9) and is urged toward said shoulder (15) by a first spring (30);
in which the said mixing means comprises a mixing slide (31) which is mounted such that it can slide axially in said internal space (9) between the seat (11) of the casing and the absorption member (23) and is urged toward said absorption member by a second spring (45), this slide having an axial passage (36), said first lateral communicating passage (21) being able to be closed off by the sliding mixing slide (31) when the latter engages with the seat (11) of the casing and said second lateral communicating passage (22) being able to be closed off by the sliding mixing slide (31) when the latter engages with the seat (11a) of said absorption member (23);
and in which the said actuating means comprises an axial thermal actuator (37) comprising a body (38) containing a product, the volume of which varies with temperature, and an axial rod (39), the position of which with respect to the body varies depending on the volume of the product, the body (38) of the actuator being secured to the slide (31) and positioned at least partially in the third communicating passage (10), and the rod (39) of the actuator being able to come axially into contact with said absorption member (23).

3. The valve as claimed in claim 2, in which said absorption member (23) comprises a plate (24) that is able to bear against said shoulder (15) and has said seat (11a) and a hub (25) that can be regulated axially with respect to the plate (24), the rod (39) of the thermal actuator being able to come into contact with this axial hub (25).

4. The valve as claimed in either of claims 2 and 3, in which the sliding mixing slide (31) comprises an external part (32) mounted such that it can slide in an annular part (13) of the casing separating the first and second communicating passages (21, 22) and a central part (34) connected to this external part and on which the body (40) of the thermal actuator is mounted.

5. The valve as claimed in any one of claims 2 to 4, **characterized in that** it comprises a spacer (42) mounted on the body (38) of the thermal actuator, the second spring (45) being inserted between this spacer (42) and a part (46) of the casing.
